# EUROPEAN PATENT SPECIFICATION

(11) **EP 3 651 324 B1**
(45) Date of publication and mention of the grant of the patent: **22.05.2024**
(21) Application number: 19202640.9
(22) Date of filing: 11.10.2019
(51) Int. Cl.: H01F 41/094, H02K 15/095, H02K 15/085

(54) **WINDING MACHINE, IN PARTICULAR FOR WINDING TURNS ON MAGNETIC POLES OF STATORS, WITH MANAGEMENT OF THE TENSION OF THE WIRE**
WICKELMASCHINE, INSBESONDERE ZUM BEWICKELN DER WICKLUNG AUF STATORMAGNETPOLEN, MIT DER VERWALTUNG DER DRAHTSPANNUNG
BOBINEUSE, NOTAMMENT POUR BOBINER LES ENROULEMENTS SUR LES POLES MAGNETIQUES DU STATOR, AVEC MANAGEMENT DE LA TENSION DU FIL

(30) Priority: 07.11.2018 IT 201800010099
(43) Date of publication of application: 13.05.2020
(73) Proprietor: Marsilli S.p.A., 26012 Castelleone (CR) (IT)
(72) Inventor: PARATI, Gian Battista, 26012 CASTELLEONE CR (IT)
(74) Representative: Modiano, Gabriella Diana

(56) References cited:
- EP-A1- 2 866 236
- EP-A1- 3 336 864
- WO-A1-2016/058947
- WO-A1-2017/186501
- CN-A- 105 743 302
- CN-A- 107 546 934
- CN-U- 207 896 831
- GB-A- 1 360 552
- JP-B2- 4 285 559

## Description

The present invention relates to a needle winding machine, particularly for winding poles arranged inside a cylindrical surface and in particular for winding turns of conducting wire on magnetic poles of stators of electric motors.

In even more detail, the present invention relates to a machine of the type provided with one or more spindles, each one of which guides in rotation a respective wire guiding tube, which can move with respect to the spindle, wherein the winding of the wire is obtained by rotating the wire guiding tube about the pole to be wound.

An example of these machines is described in Italian patent no. 1426419.

Further examples of the winding machines are disclosed in WO2016/058947A1, CN105743302A and WO2017/186501A1.

These conventional machines, although useful and practical, have the limitation that they cannot ensure optimal management of the tension of the wire during the wire winding cycle.

As is known, in fact, in order to obtain a regular and even winding, it is necessary that the tension of the wire, during winding, be kept as constant as possible.

In particular, in conventional spindle winding machines, maintaining a constant tension in the presence of accelerations and decelerations of the rotation of the spindle is difficult to achieve.

In order to improve this aspect, it would be advantageous to improve the rapidity of taking up the wire during the winding cycle.

The aim of the present invention is to overcome the above mentioned drawbacks of the known art, by devising a winding machine that makes it possible to ensure a management of the tension of the wire and a greater rapidity of taking up the wire during the entire winding cycle of the individual poles, with respect to the known art.

Within this aim, an object of the present invention is to provide a winding machine that has an alternative system for adjusting the wire tension with respect to the known art.

Another object of the invention is to provide a winding machine that enables optimal management of the tension of the wire and an adequate rapidity of taking up the wire, even if there is a plurality of spindles.

Another object of the invention is to provide a winding machine that ensures a high degree of precision in carrying out windings.

This aim and these and other objects which will become better apparent hereinafter are achieved by a winding machine according to claim 1.

Further characteristics and advantages of the invention will become better apparent from the description of two preferred, but not exclusive, embodiments of a winding machine; all of the embodiments mentioned in the detailed description are the embodiments of the present invention and are illustrated by way of nonlimiting example with the assistance of the accompanying drawings wherein:
Figure 1 is a perspective view of a first embodiment of a winding machine, according to the invention;

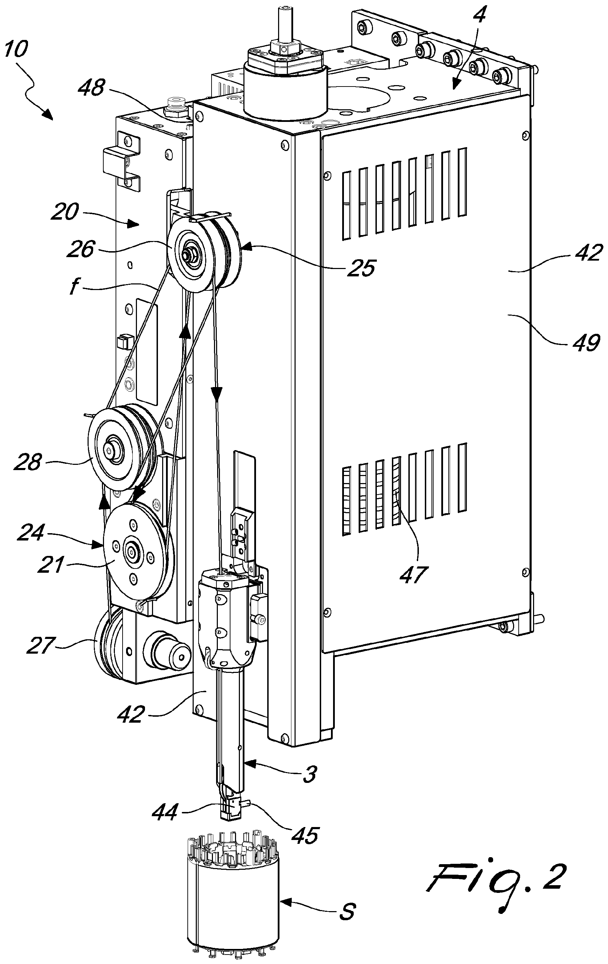

Figure 2 is a perspective view of part of the machine in Figure 1, showing a single winding assembly and the associated wire tensioning assembly;
Figure 3 is a front elevation view of the part of the machine in Figure 2;

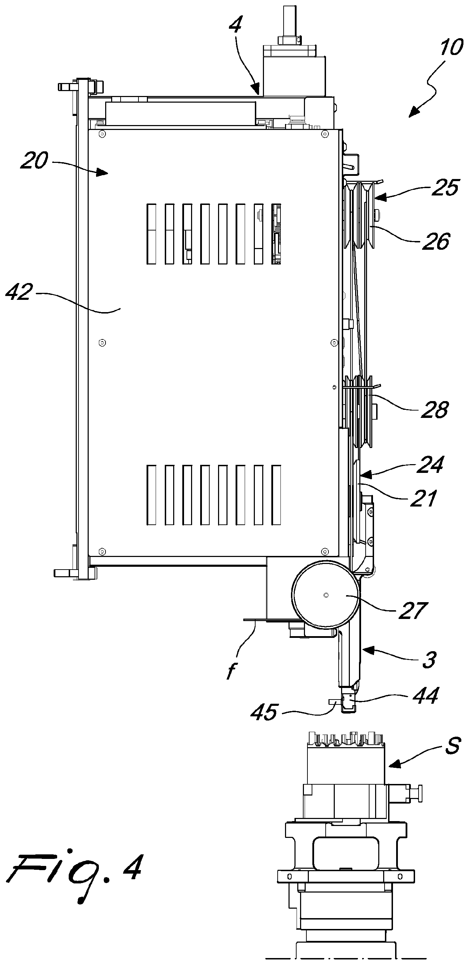

Figure 4 is a side view of the part of the machine in Figure 2;
Figure 5 is a front elevation view of part of a second embodiment of a winding machine, according to the invention;
Figure 6 is a schematic diagram of a head of a machine according to the invention.

With reference to the above figures, the winding machine for winding a wire on one or more poles arranged inside a cylindrical surface, in particular for winding turns of conducting wire f on magnetic poles of stators S, generally designated by the reference numeral 10, comprises one or more winding assemblies 4.

In the preferred embodiments there is a plurality of winding assemblies 4 and therefore, in such embodiments, the winding machine 10 is of the multi-spindle type.

A single winding assembly 4 will be described in detail, without affecting the fact that the general characteristics described with reference to the single winding assembly 4 should be understood to be common to all the winding assemblies 4; the same should be understood for the wire tensioning assemblies 20 which will be described below.

The winding assemblies 4 are apparatuses, which, in a known manner, comprise at least one motor-transmission assembly 47 (which comprises for example an electric actuator and a conventional mechanical transmission system) and a supporting structure 42 which supports a spindle 3.

The supporting structure 42 comprises one or more conventional structural elements, such as for example a chassis, and in the example shown it comprises a box-like body that contains at least some of the motor-transmission assembly 47 inside it.

The spindle 3 extends longitudinally along a spindle axis Y1 and is provided, at a longitudinal end (in the example shown, at the lower axial end), with a head 44 which supports a wire guiding tube 45 which can move with respect to such spindle 3.

The spindle 3 further can rotate about the spindle axis Y1 and it can translate (i.e. it can move linearly) along such spindle axis Y1.

In practice, the spindle 3 and the wire guiding tube 45 are functionally connected, in a known manner, to the at least one motor-transmission assembly 47 so as to be actuated by the latter.

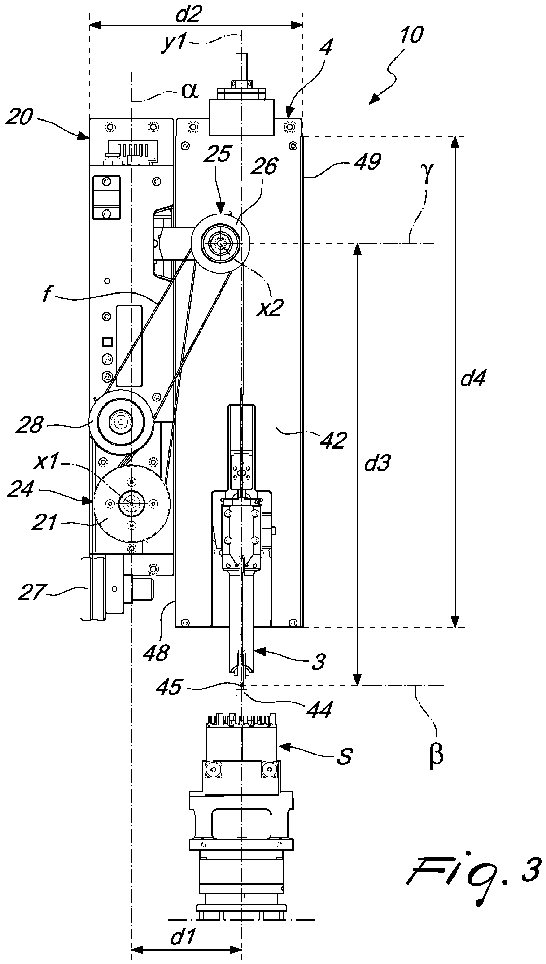

In more detail, with particular reference to Figure 3, the wire guiding tube 45 can rotate on command, with respect to the remaining part of the spindle 3, about a rotation axis that lies on a tube plane β which is substantially perpendicular to the spindle axis Y1 and which can move in a linear fashion on command along the tube plane β.

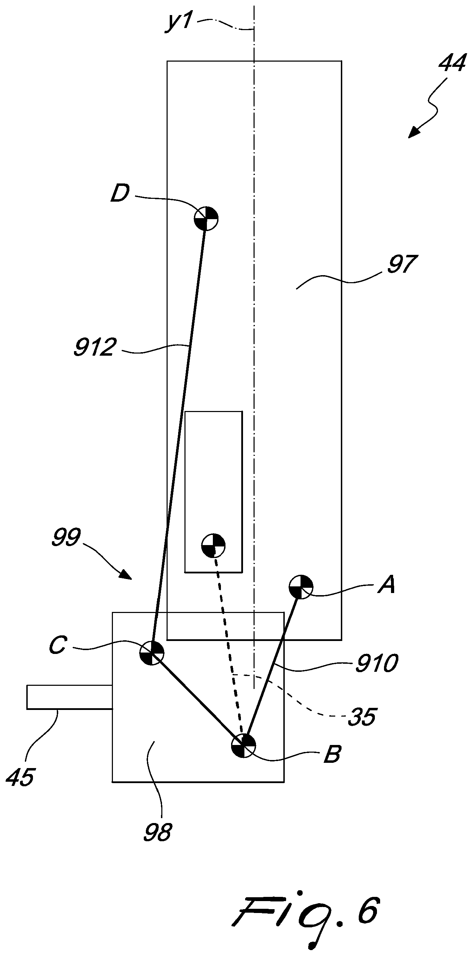

In even more detail, in a possible embodiment which is shown schematically in Figure 6, the head 44 comprises a head body 97 which is fixed to the remaining part of the spindle 3 and a block 98 which supports the wire guiding tube 45. As is evident from Figure 6, the block 98 is articulated to the head body 97 by way of an articulated quadrilateral transmission system 99 which is made up of three linkages 910, 98, 912 with pivoting axes A, B, C, D which are mutually parallel and are perpendicular to the spindle axis Y1, and more precisely: a first linkage 910 pivoted to the head body 97 and to the block 98, a second linkage constituted by the block 98 itself, and a third linkage 912 pivoted to such block 98 and to such head body 97.

Also in the example shown in Figure 6, the block 98 is connected, through a fourth linkage 35, or rather through a pair of fourth linkages 35 which are arranged mutually symmetrically. Each fourth linkage 35 is pivoted, with one of its ends, to the block 98 at the pivoting axis B pivoting the first linkage 910 to the block 98 and is pivoted, with its end that lies opposite, to one or more kinematic transmission elements which are in turn functionally connected to the motor-transmission assembly 47.

In practice, by virtue of the possibility of the wire guiding tube 45 and of the spindle 3 to move, the winding assembly 4 is capable of winding a wire f (for example made of copper) on a pole that protrudes internally from a cylindrical surface, as in the case of the poles of a stator S of an electric motor, as well as of executing multiple layers of winding (layering).

The further aspects of the operation and structure of a winding assembly of this type are conventional, described for example in Italian patent no. 1426419, and therefore they are not described further here.

According to the invention, each one of such one or more winding assemblies 4 is coupled to at least one respective wire tensioning assembly 20 for automatically adjusting the tension of the wire f that is wound by way of the spindle 3 of such winding assembly 4.

Also according to the invention, the wire tensioning assembly 20 is arranged adjacent and laterally to the winding assembly 4 to which it is coupled, and preferably it is fixed to a side wall 48 of this.

In other words, the wire tensioning assembly 20 is arranged along an axis that is parallel to and does not coincide with the spindle axis Y1, so as to be vertically aligned with the winding assembly 4.

The wire tensioning assembly 20 comprises a series of elements that define a path for the wire f and which comprise at least:
- a wire takeup arm 25, which protrudes laterally toward the spindle axis Y1, and
- a wire pushing and braking element 24, provided with an adjustment pulley 21 which can rotate about an adjustment axis X1 which lies on an adjustment plane α which is substantially parallel to the spindle axis Y1.

Preferably, such series of elements that define a path for the wire f further comprises: a first element, for wire redirection and cleaning 27, for cleaning the wire, which comprises two plates (such as for example disks or runners or blocks or the like). The plates are preferably clamped by way of an elastic element (preferably a spring) and are provided with cleaning elements (preferably two felt pads or the like) against which the wire f slides (and is cleaned by rubbing against such wire cleaning elements), and which, in the example shown, redirects the wire f toward a second element, for wire redirection 28 (which in the example shown comprises a redirection pulley on which the wire f is wound), which redirects the wire f toward the wire pushing and braking element 24, which, in turn, directs the wire f toward the wire takeup arm 25.

Note that, advantageously, the wire f, in passing between the cleaning elements comprised in the first element, for wire redirection and cleaning 27, which are clamped around the wire by virtue of the action of the elastic element, is cleaned before being sent to be wound.

According to the invention, the takeup arm 25 is provided, at a distal end with respect to the wire tensioning assembly 20, with a takeup pulley 26, which rotates about a takeup axis X2 which is arranged at an axial distance d3 from the tube plane β that is shorter than the axial space occupation d4 of the winding assembly 4. The term "axial space occupation d4 of the winding assembly 4" means the longitudinal dimension of the winding assembly 4, measured along an axis that is parallel to the spindle axis Y1.

According to the invention, as is evident from Figure 3, the takeup pulley 26 is arranged above the spindle 3, so that the wire f is fed by the takeup pulley 26 to the wire guiding tube 45, passing along the spindle axis Y1, coaxially to the spindle 3, or in any case parallel thereto.

Furthermore, the adjustment plane α is advantageously arranged at a lateral distance d1 from the spindle axis Y1 that is shorter than the total distance of lateral space occupation d2 of the set of the winding assembly 4 and of the wire tensioning assembly 20 that is coupled thereto. The term "total distance of lateral space occupation d2 of the set of the winding assembly 4 and of the wire tensioning assembly 20 that is coupled thereto" means the sum of the widths of the winding assembly 4 and of the wire tensioning assembly 20 that is coupled thereto, measured along an axis that is perpendicular to the spindle axis Y1, as shown in Figure 3 (in practice, from right to left in that Figure).

By virtue of this configuration, the wire takeup arm 25 and the wire pushing and braking element 24 of the wire tensioning assembly 20 are positioned, with respect to the spindle 3, so as to ensure the maximum rapidity of reaction of the system in correcting the tension of the wire f and, ultimately, the final quality of the wound pole in terms of positioning of the turns and their layering.

In the preferred and illustrated embodiments, the wire tensioning assembly 20 further comprises a supporting structure, to which the wire takeup arm 25 is rotatably coupled so that it can rotate (and more specifically oscillate) about an oscillation axis that is perpendicular to the spindle axis Y1 as a result of variations in the tension of the wire f; preferably, the end of the wire takeup arm 25 that lies opposite the end that carries the takeup pulley 26 is connected to elastic means that contrast the rotation of the wire takeup arm 25 about the oscillation axis in its direction of rotation that causes a reduction of the tension applied to the wire f.

In the embodiment shown, the supporting structure comprises a box-like body that, on one of its front faces parallel to the plane along which the spindle 3 moves linearly, supports at least some of the series of elements that define a path for the wire f, including the wire pushing and braking element 24 and the second element, for wire redirection 28; while the first element, for wire redirection and cleaning 27, is arranged below the box-like body so as to be rotated about an axis that is perpendicular to the adjustment axis X1.

Also in the preferred and illustrated embodiments, the wire tensioning assembly 20 also comprises devices for detecting the tension of the wire f, such as for example load cells which are connected in a known manner to one or more of the elements for redirecting the wire 27, 28 (preferably to the pulleys with which the elements for redirecting the wire 27, 28 are provided) so as to constantly detect the tension applied to the wire f.

Also in the preferred and illustrated embodiments, the wire tensioning assembly 20 further comprises devices for detecting the angular position of the wire takeup arm 25 about the oscillation axis.

In more detail, in a preferred configuration, the devices for detecting the angular position and the devices for detecting the tension of the wire are functionally connected to the wire pushing and braking element 24 for automatically adjusting the degree of thrust or braking applied to the wire f (by the wire pushing and braking element 24) as a function of the detected value of the rotation of the wire takeup arm 25 about the oscillation axis.

In practice, the wire pushing and braking element 24 also comprises, in addition to the adjustment pulley 21 on which the wire f is wound, a motor that actuates the adjustment pulley 21 with a torque that is variable and adjustable as a function of the rotation of the wire takeup arm 25 detected by the devices for detecting the angular position so as to maintain, substantially constantly, a preset tension of the wire f.

As previously mentioned, in the preferred embodiments, the machine 10 is of the multi-spindle type and comprises a plurality of winding assemblies 4, each one of which is coupled to at least one corresponding wire tensioning assembly 20, in the manner described up to now.

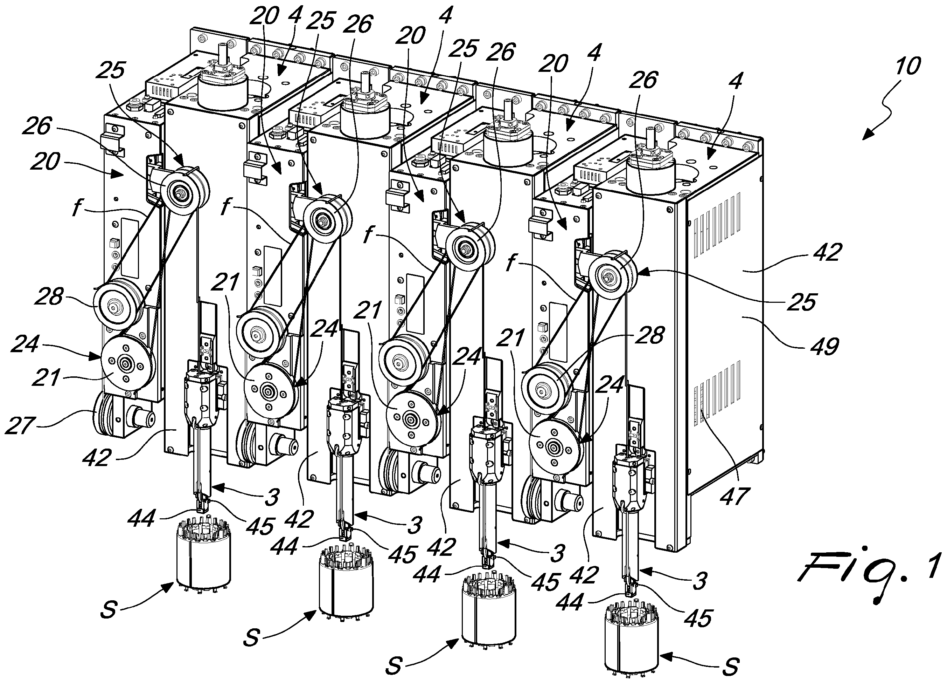

Preferably, as is evident from Figure 1, the winding assemblies 4 are arranged mutually side by side so that the spindle axes Y1 of the various spindles 3 are mutually parallel and lying substantially on a same plane; furthermore, the wire tensioning assemblies 20 are also aligned along a same plane.

In the example shown in Figure 1, the machine 10 comprises four winding assemblies 4 (and therefore four spindles 3) alternated with four wire tensioning assemblies 20; in other embodiments, the machine comprises a different number of winding assemblies 4 alternated with a corresponding number of wire tensioning assemblies 20.

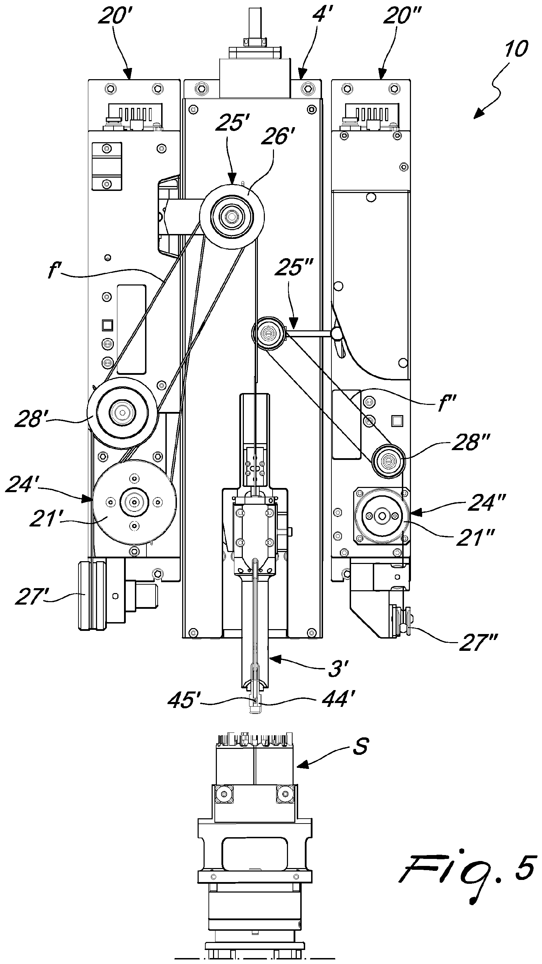

In an advanced embodiment, shown in Figure 5, at least one of the one or more winding assemblies 4' (Figure 5 shows a single winding assembly 4' for the sake of simplicity) is coupled to two wire tensioning assemblies 20', 20".

In more detail, such at least one winding assembly 4' is coupled to a first wire tensioning assembly 20', which is configured to adjust the tension of a first wire f which has a first diameter and is arranged adjacent to a first side wall 48 of such winding assembly 4, and to a second wire tensioning assembly 20", which is configured to adjust the tension of a second wire f" which has a second diameter which is different from the first diameter and is arranged adjacent to a second side wall 49 which is arranged opposite the first side wall.

Such winding assembly 4' coupled to the two wire tensioning assemblies 20', 20" is therefore configured to wind both the above mentioned first wire f and second f" wire by way of the same spindle 3'.

In practice, in this advanced embodiment, it is possible to wind the poles with conducting wires f, f" that have different cross-sections.

Operation of the winding machine is clear and evident from the foregoing description.

Note that, by virtue of the peculiarity of the invention, the wire tensioning assembly 20 is arranged side by side with and as adjacent as possible to the winding assembly 4, so that the wire pushing and braking element 24 and the wire takeup arm 25 are as close as possible to the point of work (i.e. to the wire guiding tube 45).

In practice, minimizing the lateral distance d1 of the adjustment plane α from the spindle axis Y1 and the axial distance d3 of the takeup axis X2 from the tube plane β maximizes the rapidity of reaction of the system in correcting the wire tension f and therefore the quality of the winding.

In practice it has been found that the winding machine, according to the present invention, achieves the intended aim and objects in that it makes it possible to ensure a management of the tension of the wire and a greater rapidity of taking up the wire during the entire winding cycle of the individual poles, if compared to the known art.

Another advantage of the winding machine, according to the invention, consists in having an alternative system for automatically adjusting the wire tension with respect to the known art.

Another advantage of the winding machine, according to the invention, consists in that it enables optimal management of the tension of the wire and an adequate rapidity of taking up the wire, even if there is a plurality of spindles.

Another advantage of the winding machine, according to the invention, consists in that it ensures a high level of precision in the execution of the windings.

The winding machine, thus conceived, is susceptible of numerous modifications and variations, all of which are within the scope of the appended claims.

Moreover, all the details may be substituted by other, technically equivalent elements.

In practice the materials employed, and the shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs. The scope of the protection for the present invention is defined by the text of the appended claims.

## Claims

1. A winding machine (10) for winding a wire (f) on one or more poles arranged inside a cylindrical surface, particularly for winding turns of conducting wire (f) on the magnetic poles of stators (S), which comprises one or more winding assemblies (4) which comprise a supporting structure (42) which supports a spindle (3) which extends longitudinally along a spindle axis (Y1), and which is provided, at a longitudinal end of said spindle (3), with a head (44) which supports a wire guiding tube (45) which is movable with respect to said spindle (3), said spindle (3) being rotatable about said spindle axis (Y1) and translatable along said spindle axis (Y1), said spindle (3) and said wire guiding tube (45) being functionally connected to at least one motor-transmission assembly (47), so that they are actuated by the latter,
wherein each one of said one or more winding assemblies (4) is coupled to at least one wire tensioning assembly (20) for automatically adjusting the tension of the wire (f) that is wound by way of said spindle (3), said wire tensioning assembly (20) being arranged adjacent and laterally to said winding assembly (4) in an operative condition and comprising a series of elements that define a path for the wire (f) and which comprise:
- a wire takeup arm (25), which protrudes laterally from said wire tensioning assembly (20) and extends toward said spindle axis (Y1), wherein the takeup arm (25) is provided, at a distal end with respect to the wire tensioning assembly (20), with a takeup pulley (26) which rotates about a takeup axis (X2) orthogonal to the spindle axis (Y1), wherein the takeup pulley (26) is arranged above the spindle (3), so that the wire (f) is fed by the takeup pulley (26) to the wire guiding tube (45), passing along the spindle axis (Yl), and
- a wire pushing and braking element (24), provided with an adjustment pulley (21) which can rotate about an adjustment axis (X1) which is orthogonal to said spindle axis (Y1), said wire takeup arm (24) lying in a plane which is orthogonal to said adjustment axis (X1).

2. The machine (10) according to claim 1, **characterized in that** it comprises a plurality of winding assemblies (4).

3. The machine according to claim 2, **characterized in that** said winding assemblies (4) are arranged mutually side by side so that the spindle axes (Y1) are mutually parallel.

4. The machine (10) according to one or more of the preceding claims, **characterized in that** said adjustment plane (α) is arranged at a lateral distance (d1) from the spindle axis (Y1) that is shorter than the total distance of lateral space occupation (d2) of the set comprising the winding assembly (4) and the wire tensioning assembly (20) that is coupled thereto.

5. The machine (10) according to one or more of the preceding claims, **characterized in that** said wire guiding tube (45) can rotate on command, with respect to the remaining part of the spindle (3), about a rotation axis that lies on a tube plane (β) which is substantially perpendicular to said spindle axis (Y1) and which can move in a linear fashion on command along said tube plane (β).

6. The machine (10) according to claim 5, **characterized in that** said takeup arm (25) is provided with a takeup pulley (26), which rotates about a takeup axis (X2) which is arranged at an axial distance (d3) from said tube plane (β) that is shorter than the axial space occupation (d4) of said winding assembly (4).

7. The machine (10) according to one or more of the preceding claims, **characterized in that** said series of elements that define a path for the wire (f) further comprises a first element, for wire redirection and cleaning (27), for cleaning the wire (f), and a second element, for wire redirection (28), which redirects the wire toward said wire pushing and braking element (24), which in turn directs the wire toward said wire takeup arm (25); said first wire redirection and cleaning element (27) comprising two plates which are provided with cleaning elements against which the wire (f) slides.

8. The machine (10) according to one or more of the preceding claims, **characterized in that** said wire tensioning assembly (20) comprises:
- a supporting structure, to which said wire takeup arm (25) is rotatably coupled so that it can rotate about an oscillation axis that is perpendicular to said spindle axis (Y1) as a result of variations in the tension of the wire (f);
- devices for detecting the tension of the wire (f);
- devices for detecting the angular position of said wire takeup arm (25) about said oscillation axis;
said devices for detecting the angular position and said devices for detecting the tension of the wire being functionally connected to said wire pushing and braking element (24) for automatically adjusting the degree of thrust or braking applied to the wire (f) as a function of the value detected from the rotation of said wire takeup arm (25) about said oscillation axis.

9. The machine (10) according to one or more of the preceding claims, **characterized in that** said head (44) comprises a head body (97) which is fixed to the remaining part of the spindle (3) and a block (98) which supports said wire guiding tube (45), said block (98) being articulated to said head body (97) by way of an articulated quadrilateral transmission system (99) which is made up of three linkages (910, 98, 912) with pivoting axes (A, B, C, D) which are mutually parallel and are perpendicular to the spindle axis (Y1).

10. The machine (10) according to one or more of the preceding claims, **characterized in that** at least one of said one or more winding assemblies (4') is coupled to a first wire tensioning assembly (20'), which is configured to adjust the tension of a first wire (f) which has a first diameter and is arranged adjacent to a first side wall (48) of said winding assembly (4), and to a second wire tensioning assembly (20"), which is configured to adjust the tension of a second wire (f') which has a second diameter which is different from the first diameter and is arranged adjacent to a second side wall (49) which is arranged opposite said first side wall (48); said at least one of said one or more winding assemblies (4') being configured to wind both said first wire (f) and said second wire (f') by way of the same spindle (3').

## Patentansprüche

1. Eine Wickelmaschine (10) zum Wickeln eines Drahts (f) auf einen oder mehrere Pole, die in einer zylindrischen Oberfläche angeordnet sind, insbesondere zum Wickeln von Wicklungen von Leitungsdraht (f) auf die Magnetpole von Statoren (S); welche eine oder mehrere Wickelaufbauten (4) umfasst, die eine tragende Struktur (42) umfassen, welche eine Spindel (3) trägt, die sich in Längsrichtung entlang einer Spindelachse (Y1) erstreckt und die, an einem Längsende der Spindel (3), mit einem Kopf (44) ausgestattet ist, der ein Drahtführungsrohr (45) trägt, welches mit Bezug auf die Spindel (3) beweglich ist, wobei die Spindel (3) um die Spindelachse (Y1) drehbar und entlang der Spindelachse (Y1) verschiebbar ist, wobei die Spindel (3) und das Drahtführungsrohr (45) funktionell mit mindestens einer Motor-Getriebe-Einheit (47) verbunden sind, so dass sie von Letzterer angetrieben werden;
wobei jeder der einen oder mehreren Wickelaufbauten (4) mit mindestens einem Drahtspannaufbau (20) zur automatischen Anpassung der Spannung des Drahts (f) verbunden ist, der über die Spindel (3) aufgewickelt wird; wobei der Drahtspannaufbau (20) in einem Betriebszustand angrenzend an und seitlich zum Wickelaufbau (4) angeordnet ist und eine Reihe von Elementen umfasst, die einen Pfad für den Draht (f) bestimmen und Folgendes umfassen:
- einen Drahtaufnahmearm (25), der seitlich von dem Drahtspannaufbau (20) vorsteht und sich zu der Spindelachse (Y1) erstreckt, wobei der Aufnahmearm (25) an einem distalen Ende mit Bezug auf den Drahtspannaufbau (20) mit einer Spannrolle (26) ausgestattet ist, die sich um eine Aufnahmeachse (X2) senkrecht zu der Spindelachse (Y1) dreht, wobei die Spannrolle (26) oberhalb der Spindel (3) angeordnet ist, so dass der Draht (f) von der Spannrolle (26) dem Drahtführungsrohr (45) zugeführt wird und dabei die Spindelachse (Y1) passiert, und
- ein Draht-Schub- und Bremselement (24), ausgestattet mit einer Regelscheibe (21), die sich um eine Regelachse (X1) drehen kann, welche senkrecht zu der Spindelachse (Y1) ist; wobei der Drahtaufnahmearm (24) auf einer Ebene liegt, die senkrecht zu der Regelachse (X1) ist.

2. Die Maschine (10) gemäß Anspruch 1, **dadurch gekennzeichnet, dass** sie eine Vielzahl von Wickelaufbauten (4) umfasst.

3. Die Maschine gemäß Anspruch 2, **dadurch gekennzeichnet, dass** die Wickelaufbauten (4) nebeneinander angeordnet sind, so dass die Spindelachsen (Y1) zueinander parallel sind.

4. Die Maschine (10) gemäß einem oder mehreren der obigen Ansprüche, **dadurch gekennzeichnet, dass** die Regelebene (α) in einem seitlichen Abstand (d1) von der Spindelachse (Y1) angeordnet ist, der kürzer ist als der Gesamtabstand seitlichen Platzbedarfs (d2) des Satzes, der den Wickelaufbau (4) und den damit gekoppelten Drahtspannaufbau (20) umfasst.

5. Die Maschine (10) gemäß einem oder mehreren der obigen Ansprüche, **dadurch gekennzeichnet, dass** das Drahtführungsrohr (45) sich auf Befehl mit Bezug auf den übrigen Teil der Spindel (3) um eine Drehachse drehen kann, die auf einer Rohrebene (β) liegt, welche im Wesentlichen senkrecht zu der Spindelachse (Y1) ist, und sich auf Befehl linear entlang der Rohrebene (β) bewegen kann.

6. Die Maschine (10) gemäß Anspruch 5, **dadurch gekennzeichnet, dass** der Aufnahmearm (25) mit einer Spannrolle (26) ausgestattet ist, die sich um eine Aufnahmeachse (X2) dreht, welche in einem axialen Abstand (d3) von der Rohrebene (β) angeordnet ist, welcher kürzer ist als der axiale Platzbedarf (d4) des Wickelaufbaus (4).

7. Die Maschine (10) gemäß einem oder mehreren der obigen Ansprüche, **dadurch gekennzeichnet, dass** die Reihe von Elementen, die einen Pfad für den Draht (f) bestimmen, weiter ein erstes Element zur Drahtumlenkung und -reinigung (27) zum Reinigen des Drahts (f) und ein zweites Element zur Drahtumlenkung (28) umfasst, welches den Draht zu dem Draht-Schub- und Bremselement (24) hin umlenkt, das wiederum den Draht zu dem Drahtaufnahmearm (25) lenkt; wobei das erste Drahtumlenkungs- und - reinigungselement (27) zwei Platten umfasst, die mit Reinigungselementen ausgestattet sind, gegen die der Draht (f) gleitet.

8. Die Maschine (10) gemäß einem oder mehreren der obigen Ansprüche, **dadurch gekennzeichnet, dass** der Drahtspannaufbau (20) Folgendes umfasst:
- eine tragende Struktur, mit welcher der Drahtaufnahmearm (25) drehbar gekoppelt ist, so dass er sich infolge von Veränderungen in der Spannung des Drahts (f) um eine Schwenkachse drehen kann, die senkrecht zu der Spindelachse (Y1) ist;
- Vorrichtungen zur Erfassung der Spannung des Drahts (f);
- Vorrichtungen zur Erfassung der Winkelposition des Drahtaufnahmearms (25) um die Schwenkachse;
wobei die Vorrichtungen zur Erfassung der Winkelposition und die Vorrichtungen zur Erfassung der Drahtspannung funktionell mit dem Draht-Schub- und Bremselement (24) verbunden sind, um automatisch den Grad des Schubs oder der Abbremsung anzupassen, der/die auf den Draht (f) in Abhängigkeit von dem Wert ausgeübt wird, der anhand der Drehung des Drahtaufnahmearms (25) um die Schwenkachse erfasst wird.

9. Die Maschine (10) gemäß einem oder mehreren der obigen Ansprüche, **dadurch gekennzeichnet, dass** der Kopf (44) einen Kopfkörper (97) umfasst, der an dem restlichen Teil der Spindel (3) befestigt ist, und einen Block (98), der das Drahtführungsrohr (45) trägt; wobei der Block (98) über ein gelenkiges vierseitiges Übertragungssystem (99), welches aus drei Verbindungen (910, 98, 912) mit Gelenkachsen (A, B, C, D) besteht, die zueinander parallel und zur Spindelachse (Y1) senkrecht sind, gelenkig mit dem Kopfkörper (97) verbunden ist.

10. Die Maschine (10) gemäß einem oder mehreren der obigen Ansprüche, **dadurch gekennzeichnet, dass** mindestens einer der einen oder mehreren Wickelaufbauten (4') mit einem ersten Drahtspannaufbau (20') gekoppelt ist, welcher ausgebildet ist, um die Spannung eines ersten Drahts (f') anzupassen, der einen ersten Durchmesser hat und angrenzend an eine erste Seitenwand (48) des Wickelaufbaus (4) angeordnet ist, und mit einem zweiten Drahtspannaufbau (20"), welcher ausgebildet ist, um die Spannung eines zweiten Drahts (f") anzupassen, der einen zweiten Durchmesser hat, welcher sich vom ersten Durchmesser unterscheidet, und angrenzend an eine zweite Seitenwand (49) angeordnet ist, die gegenüber der ersten Seitenwand (48) angeordnet ist; wobei der mindestens eine der einen oder mehreren Wickelaufbauten (4') ausgebildet ist, um sowohl den ersten Draht (f') als auch den zweiten Draht (f") mit derselben Spindel (3') aufzuwickeln.

## Revendications

1. Machine enrouleuse (10) destinée à enrouler un fil (f) sur un ou plusieurs axe(s) prévu(s) à l'intérieur d'une surface cylindrique, plus particulièrement à enrouler des tours de fil conducteur (f) sur les poles magnétiques de stators (S), qui comprend un ou plusieurs ensemble(s) d'enroulement (4) qui comprend/comprennent une structure de support (42) qui supporte une broche (3) qui s'étend longitudinalement le long d'un axe de broche (Y1), et qui est munie, au niveau d'une extrémité longitudinale de ladite broche (3), d'une tête (44) qui supporte un tube de guidage de fil (45) qui est mobile par rapport à ladite broche (3), ladite broche (3) pouvant tourner autour dudit axe de broche (Y1) et pouvant effectuer une translation le long dudit axe de broche (Y1), ladite broche (3) et ledit tube de guidage de fil (45) étant reliés fonctionnellement à au moins un ensemble de transmission à moteur (47), de façon à pouvoir être actionnés par ce dernier,
dans laquelle chacun dudit ou desdits ensemble(s) d'enroulement (4) est couplé à au moins un ensemble de tension de fil (20) destiné à ajuster automatiquement la tension du fil (f) qui est enroulé à l'aide de ladite broche (3), ledit ensemble de tension de fil (20) étant prévu de manière adjacente et latérale audit ensemble d'enroulement (4) dans une condition de fonctionnement et comprenant une série d'éléments qui définissent un trajet pour le fil (f) et qui comprennent :
- un bras de prise de fil (25), qui dépasse latéralement dudit ensemble de tension de fil (20) et s'étend vers ledit axe de broche (Y1), dans laquelle le bras de prise (25) est équipé, au niveau d'une extrémité distale par rapport à l'ensemble de tension de fil (20), d'une poulie de prise (26) qui tourne autour d'un axe de prise (X2) orthogonal par rapport à l'axe de broche (Y1), dans laquelle la poulie de prise (26) est prévue au-dessus de la broche (3), de sorte que le fil (f) soit fourni par la poulie de prise (26) vers le tube de guidage de fil (45), en passant le long de l'axe de broche (Y1), et
- un élément de poussée et de freinage de fil (24), équipé d'une poulie de réglage (21) qui peut tourner autour d'un axe de réglage (X1) qui est orthogonal par rapport audit axe de broche (Y1), ledit bras de prise (24) se trouvant sur un plan qui est orthogonal par rapport audit axe de réglage (X1).

2. Machine (10) selon la revendication 1, **caractérisée en ce qu'**elle comprend une pluralité d'ensembles d'enroulement (4).

3. Machine (10) selon la revendication 2, **caractérisée en ce que** lesdits ensembles d'enroulement (4) sont prévus mutuellement côte à côte de sorte que les axes de broche (Y1) soient mutuellement parallèles.

4. Machine (10) selon une ou plusieurs des revendications précédentes, **caractérisée en ce que** ledit plan de réglage (α) est prévu à une distance latérale (d1) de l'axe de broche (Y1) qui est plus courte que la distance totale d'occupation de l'espace latéral (d2) de l'ensemble comprenant l'ensemble d'enroulement (4) et l'ensemble de tension de fil (20) qui y est couplé.

5. Machine (10) selon une ou plusieurs des revendications précédentes, **caractérisée en ce que** ledit tube de guidage de fil (45) peut pivoter sur commande, par rapport à la partie restante de la broche (3), autour d'un axe de rotation qui se trouve sur un plan de tube (β) qui est sensiblement perpendiculaire audit axe de broche (Y1) et qui peut se déplacer de manière linéaire sur commande le long dudit plan de tube (β).

6. Machine (10) selon la revendication 5, **caractérisée en ce que** ledit bras de prise (25) est équipé d'une poulie de prise (26), qui pivote autour d'un axe de prise (X2) qui est prévu à une distance axiale (d3) dudit plan de tube (β) qui est plus courte que l'occupation d'espace axial (d4) dudit ensemble d'enroulement (4).

7. Machine (10) selon une ou plusieurs des revendications précédentes, **caractérisée en ce que** ladite série d'éléments qui définissent un trajet pour le fil (f) comprend en outre un premier élément destiné à rediriger et nettoyer (27) le fil, pour nettoyer le fil (f), et un deuxième élément destiné à rediriger le fil (28), qui redirige le fil vers ledit élément de poussée et de freinage (24), qui oriente à son tour le fil vers ledit bras de prise (25) ; ledit premier élément de redirection et de nettoyage (27) comprenant deux plaques qui sont équipées d'éléments de nettoyage contre lesquels le fil (f) coulisse.

8. Machine (10) selon une ou plusieurs des revendications précédentes, **caractérisée en ce que** ledit ensemble de tension de fil (20) comprend :
- une structure de support, à laquelle ledit bras de prise de fil (25) est couplé de manière pivotante de façon à pouvoir pivoter autour d'un axe d'oscillation qui est perpendiculaire audit axe de broche (Y1) suite à des variations de la tension du fil (f) ;
- des dispositifs destinés à détecter la tension du fil (f) ;
- des dispositifs destinés à détecter la position angulaire dudit bras de prise de fil (25) autour dudit axe d'oscillation ;
lesdits dispositifs destinés à détecter la position angulaire et lesdits dispositifs destinés à détecter la tension du fil étant reliés fonctionnellement audit élément de poussée et de freinage de fil (24) afin de régler automatiquement le degré de poussée ou de freinage appliqué au fil (f) en fonction de la valeur détectée à partir de la rotation dudit bras de prise de fil (25) autour dudit axe d'oscillation.

9. Machine (10) selon une ou plusieurs des revendications précédentes, **caractérisée en ce que** ladite tête (44) comprend un corps de tête (97) qui est fixé sur la partie restante de la broche (3) et un bloc (98) qui supporte ledit tube de guidage de fil (45), ledit bloc (98) étant articulé par rapport audit corps de tête (97) à l'aide d'un système de transmission quadrilatérale articulée (99) qui est composé de trois liaisons (910, 98, 912) avec des axes de pivotement (A, B, C, D) qui sont mutuellement parallèles et sont perpendiculaires à l'axe de broche (Y1).

10. Machine (10) selon une ou plusieurs des revendications précédentes, **caractérisée en ce qu'**au moins l'un dudit ou desdits ensemble(s) d'enroulement (4') est couplé à un premier ensemble de tension de fil (20'), qui est configuré pour régler la tension d'un premier fil (f') qui possède un premier diamètre et est prévu de manière adjacente à une première paroi latérale (48) dudit ensemble d'enroulement (4), et à un deuxième ensemble de tension de fil (20"), qui est configuré pour régler la tension d'un deuxième fil (f") qui possède un deuxième diamètre qui est différent du premier diamètre et est prévu de manière adjacente à une deuxième paroi latérale (49) qui est opposée à ladite première paroi latérale (48) ; ledit au moins un dudit ou desdits ensemble(s) d'enroulement (4') étant configuré pour enrouler ledit premier fil (f') et ledit deuxième fil (f") à l'aide de la même broche (3').
